# EUROPÄISCHE PATENTANMELDUNG

(11) **EP 1 614 711 A1**
(43) Veröffentlichungstag der Anmeldung: **11.01.2006**
(21) Anmeldenummer: 04015173.0
(22) Anmeldetag: 29.06.2004
(51) Int. Cl.: C08K 3/04, C08K 9/02, B60C 1/00, C09C 1/60

(54) **Kautschukmischung für Reifen**

(71) Anmelder: Continental Aktiengesellschaft, 30165 Hannover (DE)
(72) Erfinder: Kleffmann, Jens, 30165 Hannover (DE); Lacayo-Pineda, Jorge, Dr., 31535 Neustadt (DE); Meissner, Steffi, 31552 Rodenberg (DE)

(57) **Zusammenfassung**

Die Erfindung betrifft eine mit Schwefel vulkanisierbare, zumindest einen Dienkautschuk aufweisende Kautschukmischung für den Laufstreifen oder den Wulstbereich eines Reifens, insbesondere eines Nutzfahrzeugreifens.

Für hohe Wärmeleitfähigkeit enthält die Kautschukmischung zumindest einen zur Agglomeratbildung fähigen Ruß enthält, dessen turbostatische Struktur in der Art ausgebildet ist, dass sie bei Abbildung in einem konventionellen Transmissionselektronenmikroskop bei einer Beschleunigungspannung von < 200 kV mit einer Punktauflösung von 0,3 nm Beugungskontrasteffekte zeigt.

## Beschreibung

Die Erfindung betrifft eine mit Schwefel vulkanisierbare, zumindest einen Dienkautschuk aufweisende Kautschukmischung für den Laufstreifen und/oder den Wulstbereich eines Reifens, insbesondere eines Nutzfahrzeugreifens. Die Erfindung betrifft ferner einen Reifen, insbesondere einen Nutzfahrzeugreifen, dessen Laufstreifen zumindest zum Teil aus der mit Schwefel vulkanisierten Kautschukmischung besteht und/oder der im Wulstbereich die mit Schwefel vulkanisierte Kautschukmischung aufweist.

Die Kautschukmischungen für Laufstreifen von Fahrzeugreifen, insbesondere Fahrzeugluftreifen, besitzen aufgrund ihrer gewünschten Eigenschaften im Hinblick auf optimales Fahrverhalten wie z. B. Handling, Nassrutsch- und Bremsverhalten, Rollwiderstand und Abriebverhalten speziell auf diese Eigenschaften optimierte Zusammensetzungen. Diese für die optimalen Fahreigenschaften verwendeten Kautschukmischungen weisen im Allgemeinen eine schlechte thermische Leitfähigkeit (Wärmeleitfähigkeit und Temperaturleitfähigkeit) auf.

Beim Gebrauch des Reifens wird durch Walk- und Fliehkräfte und durch die damit verbundenen dynamischen Verformungen aufgrund des Hystereseverlustes des Vulkanisates thermische Energie entwickelt, die nur sehr schlecht abgeführt werden kann. Damit einher geht eine Wärmeentwicklung im Reifen und dort insbesondere an den Gürtelkanten. Dies führt zu einer Beeinträchtigung der Runderneuerungsfähigkeit (vor allem in heißen Ländern) und der Reifenhaltbarkeit. Das Problem der Wärmeabführung ist bei Nutzfahrzeugreifen besonders zu beachten, da diese Reifen hohen Walkkräften ausgesetzt sind und die Laufstreifen sehr dick ausgebildet sind, was eine Wärmeabführung an die Umgebungsluft erschwert.

Es ist bekannt, dass sich der Wärmeaufbau und damit die Temperatur im Bereich des Gürtels und insbesondere der Gürtelkanten reduzieren lässt, indem Mischungen verwendet werden, deren Vulkanisate einen niedrigen Hystereseverlust aufweisen. Solche Mischungen sind beispielsweise Mischungen, die Kieselsäure als Füllstoffbasis in Kombination mit einem Silankupplungsagens enthalten. Kieselsäurehaltige Mischungen weisen allerdings in der Regel keine gute Wärmeleitfähigkeit auf, so dass entstandene Wärme nur schlecht abgeleitet werden kann. Darüber hinaus zeichnen sich Vulkanisate von kieselsäurehaltige Mischungen durch eine im Vergleich zu reinen Rußmischungen geringere Abriebbeständigkeit aus, was für verschiedene Einsatzmöglichkeiten, z. B. bei Nutzfahrzeugreifen, nicht gewünscht ist.

Aus der DE-OS 1755301 ist es bekannt, die Temperaturentwicklung in Fahrzeugluftreifen und insbesondere in den Laufflächen zu verringern, indem der Fahrzeugluftreifen - und insbesondere in die Reifenlauffläche - homogen in den Kautschuk eingearbeitet Graphit enthält. Ein Laufstreifen, der in seiner Gesamtheit aus einer Graphit enthaltenden Kautschukmischung hergestellt ist, ermöglicht somit durch seine verbesserte Wärmeleitfähigkeit bei früher üblichen Diagonalreifen eine Erniedrigung der Temperatur in der Schulter des Laufstreifens. Die Zugabe von Graphit zu Kautschukmischungen speziell für Laufstreifen hat aber zur Folge, dass sich die Eigenschaften der vulkanisierten Mischungen verändern. Durch die Einmischung von Graphit in Kautschukmischungen für Laufstreifen werden beispielsweise der Nassgriff, der Trockengriff und vor allem der Abrieb negativ beeinflusst. Dies ist unter anderem auf die Gleiteigenschaften der Graphitpartikel zurückzuführen.

In der EP-A-1 031 441 wird zur effektiven Absenkung der Temperatur von Gummimischungen im gürtelnahen Bereich von Fahrzeugluftreifen vorgeschlagen, dass am Profilrillengrund und/oder im Bereich der Reifenschultern eine Gummimischung angeordnet ist, deren Wärmeleitfähigkeit um mindestens 5 % höher liegt als die Wärmeleitfähigkeit der sie umgebenden Gummimischung. Zur Erhöhung der Wärmeleitfähigkeit der Mischungen werden neben Ruß Füllstoffe wie Aluminium, Magnesium, Kupfer, Zink, Nickel oder metallenthaltende Substanzen, wie z. B. Zinkoxid, Aluminiumhydroxid, Aluminiumoxid, Silicium-Aluminiumoxide, Magnesiumoxid, Chromoxid, Titandioxid oder Siliciumcarbid, als Zuschlagstoffe vorgeschlagen.

Der vorliegenden Erfindung liegt nun die Aufgabe zugrunde, Kautschukmischungen für Laufstreifen oder den Wulstbereich von Reifen bereitzustellen, deren Vulkanisate sich durch eine gute Wärmeleitfähigkeit auszeichnen. Reifen, deren Laufstreifen aus einer derartigen Mischung gefertigt sind, sollen sich durch effektive Temperaturabsenkung im Gürtelkantenbereich beim Fahrbetrieb und eine Verminderung von Rissbildungen an der Gürtelkante auszeichnen. Reifen mit einer solchen Mischung im Wulstbereich sollen sich durch eine verbesserte Wulsthaltbarkeit auszeichnen.

Gelöst wird diese Aufgabe erfindungsgemäß dadurch, dass die Kautschukmischung zumindest einen zur Agglomeratbildung fähigen Ruß enthält, dessen turbostatische Struktur in der Art ausgebildet ist, dass sie bei Abbildung in einem konventionellen Transmissionselektronenmikroskop bei einer Beschleunigungspannung von < 200 kV mit einer Punktauflösung von 0,3 nm Beugungskontrasteffekte zeigt.

Herkömmliche Ruße, die in der Reifenfertigung eingesetzt werden, wie z. B. Furnace-Ruße der Typen N 110 oder N 339, weisen eine kugelsymmetrische Primärstruktur auf, die im Transmissionselektronenmikroskop als kugelsymmetrische Objekte im Streuabsorptionskontrast abgebildet werden. Beugungskontrasteffekte werden dabei nicht beobachtet, da die Partikel keine ausreichend großen Bereiche aufweisen, in denen korrelierte Streuung mit beobachtbarer Intensität stattfinden kann. Die turbostatische Struktur der herkömmlichen Ruße, die sich durch eine gestörte Struktur äquidistanter Ebenen mit hexagonaler Symmetrie auszeichnet, ist nicht so ausgebildet, dass sie einen Beitrag zur Gesamtstreuintensität leisten kann.

Es hat sich nun herausgestellt, dass Ruße, deren turbostatische Struktur in der Art ausgebildet ist, dass sie bei Abbildung in einem konventionellen Transmissionselektronenmikroskop mit einer Punktauflösung von 0,3 nm Beugungskontrasteffekte zeigt, überraschenderweise als Füllstoff in Kautschukmischungen die Wärmeleitfähigkeit deutlich erhöhen können. Diese Ruße zeigen im Transmissionselektronenmikroskop so genannte Biegekonturen, die nur in kristallinen Objekten bei lokalen Änderungen der Beugungsbedingungen entstehen können. Das bedeutet, dass die turbostatische Struktur derart hoch ist, dass sie im Transmissionselektronenmikroskop auflösbare Biege- und Dickenkonturen infolge korrelierter Streuung ausreichender Intensität erzeugt. Die Beugungskontrasteffekte sind auf den Transmissionselektronenmikroskop-Abbildungen als dunkle Striche erkennbar.

Trotz der Veränderung der turbostatischen Struktur der speziellen Ruße im Vergleich zu den herkömmlichen Rußen, behalten die speziellen Ruße die Fähigkeit zur Bildung von Aggregaten und Agglomeraten bei, so dass eine Wechselwirkung mit der Kautschukmatrix infolge der Verzweigung der Agglomerate möglich ist.

Der Ruß mit der hohen turbostatischen Struktur kann z. B. aus herkömmlichen Rußen (Furnace-, Channel-, Thermal- oder Acetylenrußen) hergestellt werden, die einer Wärmebehandlung in einer inerten Atmosphäre (z. B. Stickstoff) bei Temperaturen oberhalb von 1100 °C hergestellt werden, wobei eine Graphitisierung des Rußes eintritt. Andere Möglichkeiten zur Herstellung bestehen in der Verwendung erhöhter Temperaturen bei der Herstellung, in dem Verzicht auf Abschreckprozesse und in einer Verlängerung der Verweildauer der Ruße im Reaktor.

Bevorzugt wird ein Ruß verwendet, der durch thermische Behandlung von Acetylenruß hergestellt ist. Die Vulkanisate mit solchen Rußen zeichnen sich durch einen besonders hohen Weiterreißwiderstand aus.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Gemäß einer vorteilhaften Weiterbildung der Erfindung enthält die Kautschukmischung 5 bis 40 phr, bevorzugt 5 bis 25 phr, des speziellen Rußes mit hoher turbostatischer Struktur. Bei diesen Mengen an Ruß können die besten Ergebnisse hinsichtlich der Wärmeleitfähigkeit erzielt werden, ohne dass andere gewünschte Vulkanisateigenschaften stark in Mitleidenschaft gezogen werden.

Der Ruß mit der hohen turbostatischen Struktur kann in der Kautschukmischung in Kombination mit anderen Füllstoffen, wie z. B. herkömmlichen Rußen für die Verstärkung von Gummiprodukten und insbesondere Reifen oder Kieselsäure, eingesetzt werden. Als besonders vorteilhaft hat sich herausgestellt, wenn der Ruß mit der hohen turbostatischen Struktur in Kombination mit 20 - 45 phr eines hoch abriebbeständigen Rußes mit einer Jodadsorptionszahl von 110 - 170 g/kg und einer DBP-Zahl von 90 - 140 cm³/100 g eingesetzt wird. Die Wärmeleitfähigkeit der Vulkanisate aus solchen Mischungen ist besonders hoch und die anderen Vulkanisateigenschaften, insbesondere der Abrieb, verbleiben auf einem hohen Niveau.
Hoch abriebbeständige Ruße (früher als SAF-Typen bezeichnet) sind Furnace-Ruße, die sich durch eine hohe Struktur bei geringer Teilchengröße auszeichnen. Die Jodadsorptionszahl wird gemäß ASTM-D 1510 und die DBP-Zahl (Dibutylphthalat-Zahl) gemäß ASTM-D 2414 bestimmt. Die Teilchendurchmesser liegen in der Regel zwischen 10 und 25 nm. Es können z. B. Ruße des Typs N121, N110 und N220 eingesetzt werden.

Die mit Schwefel vulkanisierbare Kautschukmischung kann unterschiedlichste dem Fachmann für die Anwendung in Reifen bekannte Kautschuke enthalten, von denen jedoch zumindest einer aus der Gruppe der Dienkautschuke ausgewählt sein muss. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR, E-SBR, S-SBR). Diese Dienelastomere lassen sich gut zu der erfindungsgemäßen Kautschukmischung verarbeiten und zeigen gute Reifeneigenschaften.

Insbesondere für den Einsatz der Kautschukmischung als Laufstreifen für Nutzfahrzeugreifen ist es von Vorteil, wenn die Mischung zumindest 95 phr Naturkautschuk enthält. Vulkanisate aus Mischungen mit einem derart hohen Anteil an Naturkautschuk zeichnen sich durch eine besonders hohe Weiterreißfestigkeit aus, was im Reifen zu einer Verminderung von Schnitten und Ausbrüchen (Chipping und Chunking) im Laufstreifen führt.

Des Weiteren kann die erfindungsgemäße Kautschukmischung übliche Zusatzstoffe in üblichen Gewichtsteilen enthalten. Zu diesen Zusatzstoffen zählen z. B. Weichmacher, Alterungsschutzmittel wie z. B. N-(1,3-dimethylbutyl)- N'-phenyl-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Kupplungsagenzien, Verarbeitungshilfsmittel wie z. B. Zinkoxid und Fettsäuren wie Stearinsäure, Wachse und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird die gemischte Mischung weiterverarbeitet, z. B. durch einen Extrusionsvorgang, und in die entsprechende Form eines Laufstreifenrohlings, z. B. für einen Nutzfahrzeugreifen, gebracht. Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Kautschukmischungsstreifens aufgewickelt werden. Nach der Vulkanisation des Fahrzeugreifens weist der Reifen eine hohe Haltbarkeit der Gürtelkanten auf, da die erfindungsgemäße Mischung durch ihre hohe Wärmeleitfähigkeit eine gute Ableitung der an den Gürtelkanten auftretenden Wärme gewährleistet. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die in unmittelbarer Nähe des Gürtels vorliegende Mischung erfindungsgemäß ausgebildet ist. Auch im Wulstbereich des Reifens kann die erfindungsgemäße Mischung z. B. als Kernprofil verwendet werden.

Die mit den erfindungsgemäßen Mischungen als Laufstreifen und/oder im Wulstbereich hergestellten Reifen zeichnen sich durch eine hohe Haltbarkeit aus und die Temperaturen im Gürtelkanten- und Wulstbereich werden effektiv abgesenkt, was vor allem beim Einsatz in Nutzfahrzeugreifen, die z. B. einen Dreiecksgürtel aufweisen, von Vorteil ist und zusätzlich die Runderneuerungsfähigkeit der Nutzfahrzeugreifen verbessert.

Die Erfindung soll nun anhand von Figuren und von Vergleichs- und Ausführungsbeispielen, die in der Tabelle 1 zusammengefasst sind, näher erläutert werden. Dabei zeigt:
- Fig. 1: eine Aufnahme von herkömmlichem Acetylenruß mit einem Transmissionselektronenmikroskop
- Fig. 2: eine Aufnahme von Ruß, dessen turbostatische Struktur in der Art ausgebildet ist, dass sie bei Abbildung in einem Transmissionselektronenmikroskop mit einer Punktauflösung von 0,3 nm Beugungskontrasteffekte zeigt.

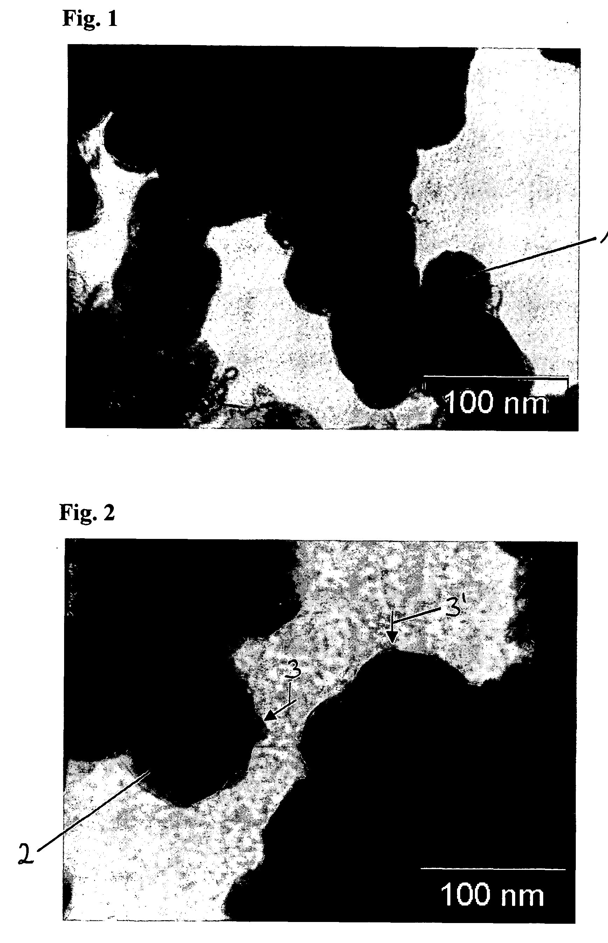

Fig. 1 wurde mit Hilfe eines Transmissionselektronenmikroskopes mit einer Punktauflösung von 0,3 nm bei 100 kV erzeugt. In Fig. 1 sind die kugelförmigen Primärpartikel 1 von herkömmlichem Acetylenruß sichtbar, die sich zu Agglomeraten zusammengelagert haben. Beugungskontrasteffekte sind nicht sichtbar.

Fig. 2 wurde unter den gleichen Bedingungen erstellt und zeigt Acetylenruß, der 1 h bei 2100 °C unter Stickstoff erhitzt wurde. Dabei hat sich die Morphologie des Rußes in der Art verändert, dass innerhalb der kugelförmigen Primärpartikel 2 Beugungskontrasteffekte als dunkle Streifen, von denen zwei mit Pfeilen 3, 3' markiert sind, sichtbar werden. Diese Beugungskontrasteffekte kommen dadurch zustande, dass sich im Ruß verstärkt turbostatische Strukturen ausgebildet haben und diese Strukturen auflösbare Biegekonturen infolge korrelierter Streuung ausreichender Intensität erzeugen. Auch in der Fig. 2 liegt der Ruß in Agglomeraten vor.

Es wurden Mischungen mit herkömmlichen und erfindungsgemäßen Rußen mit hoher turbostatischer Struktur hergestellt, wobei für die Herstellung der Ruße mit hoher turbostatischer Struktur - in der Tabelle gekennzeichnet mit der Ergänzung turb. - die herkömmlichen Ruße 1 h bei 2100 °C unter Stickstoff erhitzt wurden. Die Mischungen enthielten alle 100 phr Naturkautschuk, 3 phr Alterungsschutzmittel, 2,5 phr Ozonschutzwachs, 3 phr Zinkoxid, 2 phr Stearinsäure, 1 phr Beschleuniger und 1,65 phr Schwefel und wurden nur in Art und Menge der verwendeten Ruße variiert. In der Tabelle 1 sind die Vergleichsmischungen mit V, die erfindungsgemäßen Mischungen mit E gekennzeichnet.

Die Mischungsherstellung erfolgte unter üblichen Bedingungen in zwei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften bestimmt, die in der Tabelle 1 aufgelistet sind. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- statischer Modul (Spannungswerte) bei 100 und 300 % Dehnung bei Raumtemperatur gemäß DIN 53 504
- Shore-A-Härte bei Raumtemperatur gemäß DIN 53 505
- Rückprallelastizität bei Raumtemperatur gemäß DIN 53 512
- Bruchenergiedichte bestimmt im Zugversuch nach DIN 53 504, wobei die Bruchenergiedichte die bis zum Bruch erforderliche Arbeit, bezogen auf das Volumen der Probe, ist
- Wärmeleitfähigkeit mit dem Gerät Kemtherm QTM-D3-PD3 der Firma Kyoto Electronics gemäß DIN 52 612 (Ausgangstemperatur: Raumtemperatur), die Wärmeleitfähigkeit der V1 wurde gleich 100 % gesetzt. Werte kleiner als 100 bedeuten eine Verschlechterung der entsprechenden Eigenschaft
- Weiterreißwiderstand bei Raumtemperatur in Längs- und Querrichtung gemäß DIN 53 515 (nach Graves)

**Tabelle 1**

| **Ruß** | **Einheit** | **V1** | **E2** | **V3** | **E4** | **V5** | **E6** | **V7** | **E8** | **V9** | **E10** |
|---|---|---|---|---|---|---|---|---|---|---|---|
| N 121 | phr | 48,5 | 28,5 | 28,5 | 28,5 | 28,5 | 28,5 | 28,5 | 28,5 | 28,5 | 28,5 |
| N 121 turb. | phr | - | 20 | - | - | - | - | - | - | - | - |
| N 339 | phr | - | - | 20 | - | - | - | - | - | - | - |
| N 339 turb. | phr | - | - | - | 20 | - | - | - | - | - | - |
| N 660 | phr | - | - | - | - | 20 | - | - | - | - | - |
| N 660 turb. | phr | - | - | - | - | - | 20 | - | - | - | - |
| HV 3396^{a} | | - | - | - | - | - | - | 20 | - | - | - |
| HV 3396 turb. | phr | - | - | - | - | - | - | - | 20 | - | - |
| Acetylenruß^{b} | phr | - | - | - | - | - | - | - | - | 20 | - |
| Acetylenruß | phr | - | - | - | - | - | - | - | - | - | 20 |
| turb. | | | | | | | | | | | |

| **Eigenschaften** | **Einheit** | | | | | | | | | | |
|---|---|---|---|---|---|---|---|---|---|---|---|
| Zugfestigkeit | MPa | 23 | 22 | 24 | 22 | 22 | 20 | 25 | 22 | 22 | 21 |
| Reißdehnung | % | 474 | 547 | 488 | 555 | 487 | 548 | 503 | 552 | 492 | 497 |
| Modul 100 % | MPa | 2,2 | 1,7 | 2,2 | 1,7 | 2,0 | 1,6 | 2,1 | 1,7 | 2,3 | 2,1 |
| Modul 300 % | MPa | 13,8 | 9,6 | 14,0 | 9,1 | 12,4 | 8,5 | 13,4 | 9,1 | 12,8 | 11,1 |
| Härte | Shore A | 62 | 60 | 61 | 60 | 59 | 57 | 63 | 61 | 61 | 60 |
| Rückpr.elas. bei RT | % | 45 | 45 | 47 | 47 | 51 | 53 | 44 | 42 | 50 | 50 |
| Bruchenergiedichte | J/cm³ | 41 | 43 | 45 | 43 | 40 | 39 | 47 | 43 | 42 | 38 |
| Wärmeleitfähigkeit | % | 100 | 113 | 99 | 112 | 99 | 111 | 95 | 107 | 115 | 124 |
| Weiterreißwiderstand längs | N/mm | - | - | - | - | - | - | - | - | 68 | 96 |
| Weiterreißwiderstand quer | N/mm | - | - | - | - | - | - | - | - | 73 | 105 |

| | | | | | | | | | | | |
|---|---|---|---|---|---|---|---|---|---|---|---|
| ^{a} Hochstrukturruß, DBP 130 - 145 cm³/100 g, Jodadsorptionszahl 170 - 190 g/kg, Columbian Chemicals Europa GmbH, Deutschland | | | | | | | | | | | |
| ^{b} Acetylenruß mit einer Jodadsorptionszahl von 90 g/kg, einer DBP-Zahl von 199 cm³/g, einem Teilchendurchmesser von ca. 40 nm und einer BET-Zahl von 75 m²/g | | | | | | | | | | | |

Aus der Tabelle 1 wird ersichtlich, dass man durch die Verwendung von Ruß mit hoher turbostatischer Struktur Vulkanisate mit besonders hoher Wärmeleitfähigkeit herstellen kann. Reifen mit einem Laufstreifen aus einer erfindungsgemäßen Mischung zeichnen sich durch eine verbesserte Rissbeständigkeit in Gürtelkantennähe aus, da die beim Fahrbetrieb entstehende Wärme durch die Mischung mit verbesserter Wärmeleitfähigkeit effektiv abgeführt werden kann. Verwendet man die Mischungen im Wulstbereich, wird auch dort die entstehende Wärme effektiv abgeführt. Neben der Erhöhung der Wärmeleitfähigkeit durch Einsatz von Rußen mit turbostatischer Struktur kann mit diesen Rußen außerdem die Rissfestigkeit der Vulkanisate signifikant verbessert werden, was anhand der deutlich erhöhten Weiterreißwiderstände ersichtlich wird.

Der Ruß mit turbostatischer Struktur (E10), der durch die thermische Behandlung von Acetylenruß hergestellt wurde, zeigt besonders vorteilhafte physikalische Eigenschaften der Vulkanisate, da der Modul der Vulkanisate im Vergleich zum Vulkanisat mit herkömmlichem Ruß nur geringfügig beeinflusst wird. Auf diese Weise kann die Wärmeleitfähigkeit von Vulkanisaten, in denen Acetylenruß durch turbostatischen Acetylenruß ersetzt wird, signifikant erhöht werden, ohne dass grundlegende Eigenschaften der Vulkanisate wesentlich verändert werden.

## Patentansprüche

1. Mit Schwefel vulkanisierbare, zumindest einen Dienkautschuk aufweisende Kautschukmischung für den Laufstreifen oder den Wulstbereich eines Reifens, insbesondere eines Nutzfahrzeugreifens,
**dadurch gekennzeichnet, dass**
sie zumindest einen zur Agglomeratbildung fähigen Ruß enthält, dessen turbostatische Struktur in der Art ausgebildet ist, dass sie bei Abbildung in einem konventionellen Transmissionselektronenmikroskop bei einer Beschleunigungspannung von < 200 kV mit einer Punktauflösung von 0,3 nm Beugungskontrasteffekte zeigt.

2. Kautschukmischung nach Anspruch 1, **dadurch gekennzeichnet, dass** der Ruß durch thermische Behandlung von Acetylenruß hergestellt ist.

3. Kautschukmischung nach Anspruch 1 oder 2, **dadurch gekennzeichnet, dass** sie 5 bis 40 phr des Rußes enthält.

4. Kautschukmischung nach zumindest einem der vorhergehenden Ansprüche, **dadurch gekennzeichnet, dass** sie 5 bis 25 phr des Rußes enthält.

5. Kautschukmischung nach zumindest einem der vorhergehenden Ansprüche, **dadurch gekennzeichnet, dass** sie als weiteren Ruß 20 - 45 phr eines hoch abriebbeständigen Rußes mit einer Jodadsorptionszahl von 110 - 170 g/kg und einer DBP-Zahl von 90 - 140 cm³/100 g enthält.

6. Kautschukmischung nach zumindest einem der vorhergehenden Ansprüche, **dadurch gekennzeichnet, dass** sie zumindest 95 phr Naturkautschuk enthält.

7. Reifen, insbesondere Nutzfahrzeugreifen, dessen Laufstreifen zumindest zum Teil aus einer mit Schwefel vulkanisierten Kautschukmischung nach zumindest einem der Ansprüche 1 bis 6 besteht und/oder der im Wulstbereich eine mit Schwefel vulkanisierte Kautschukmischung nach zumindest einem der Ansprüche 1 bis 6 aufweist.
